# EUROPÄISCHE PATENTSCHRIFT

(11) **EP 0 900 628 B1**
(45) Veröffentlichungstag und Bekanntmachung des Hinweises auf die Patenterteilung: **05.03.2003**
(21) Anmeldenummer: 98116563.2
(22) Anmeldetag: 02.09.1998
(51) Int. Cl.: B23Q 16/00, F16B 21/10, B23Q 7/14, F16B 21/16, B23Q 3/18

(54) **Schnell-Pass-System**
Quick fitting system
Sytème de raccord rapide

(30) Priorität: 03.09.1997 DE 19739460
(43) Veröffentlichungstag der Anmeldung: 10.03.1999
(73) Patentinhaber: HOHENSTEIN Vorrichtungsbau und Spannsysteme GmbH, 09337 Hohenstein-Ernstthal (DE)
(72) Erfinder: Franzki, Michael, 78166 Donaueschingen (DE)
(74) Vertreter: Grosse, Ulrich

(56) Entgegenhaltungen:
- DE-A- 3 801 654
- DE-A- 3 929 931
- US-A- 2 707 419
- US-A- 4 500 079
- US-A- 4 645 391

## Beschreibung

Die Erfindung geht von dem im Oberbegriff des Patentanspruches 1 definierten Gegenstandes aus.

Für ein paßgenaues wiederholbares Fügen von mindestens zwei, mit jeweils einer ebenen Fläche plan aneinanderliegender, Bauteile von Maschinen und anderen Industriegütern oder aneinanderliegender Werkstücke, in definierter Lage zueinander angeordnet, beispielsweise als eine Schnittstelle zwischen Werkstückeinspannvorrichtungen und Paletten von Bohr-Fräs-Bearbeitungszentren ausgebildet, sind mindestens jeweils zwei in einem bestimmten Abstand zueinander angeordnete Paßsystembolzen in mindestens zwei adäquat parallel angeordnete und gleichdimensionierte Paßbohrungen oder Paßbuchsen ragend, eingepaßt und von mindestens einem dritten Systembolzen in der eingepaßten Fügeposition miteinander befestigt.

Der gattungsbildende Stand der Technik ist durch genormte Lösungen bestimmt.
So werden nach DIN 6348 bei schnellspannenden Bohrvorrichtungen Auflageplatten für die Werkstücke auf den Vorrichtungskörpern der Bohrvorrichtungen mittels Stiftaufnahmen genau positioniert und auf dem Vorrichtungskörper verschraubt. Dafür steht jeweils ein runder Paßstift und ein abgeflachter Paßstift zur Verfügung. Die Bohrplatten der gleichen Bohrvorrichtungen werden von den Führungssäulen aufgenommen und bewegt. Dafür stehen zwei Führungssäulen zur Verfügung, eine runde Führungsäulenaufnahme und eine abgeflachte Führungsäulenaufnahme. Der abgeflachte Paßstift ermöglicht ebenso wie die abgeflachte Führungssäulenaufnahme einen eng begrenzten Ausgleich unterschiedlicher Abstandmaße der Bohrungen in der Auflageplatte bzw. in der Bohrplatte gegenüber dem Bolzenabstandsmaß bzw. dem Führungssäulenabstandsmaß der Bohrvorrichtung. Der runde Bolzen bzw. die runde Führungssäulenaufnahme sichern gleichzeitig eine mittengenaue Plattenjustierung in den zugeordneten Bohrungen.

Nach DIN 55201 sind Paletten für Werkzeugmaschinen genormt, deren mittengenaue Aufnahme auf den Palettenträgern des jeweiligen Bohr-Fräs-Bearbeitungszentrums über einen als Rundbolzen ausgeführten Mittenbolzen realisiert wird. Die Ausrichtung der Paletten auf den Palettenträgern erfolgt über eine abgeflachten Richtbolzen. Auch bei dieser Lösung ist ein bestimmter eng begrenzter Ausgleich unterschiedlicher Abstandsmaße der Bohrungen im Palettenträger zu den Abständen zwischen Mitten- und Richtbolzen an den Paletten möglich.
Dabei bedingen aber die Toleranzüberschneidungen oder die Toleranzüberschreitungen beider Abstandsmaße Situationen die ein paßgenaues wiederholbares Fügen erschweren und verzögern oder entsprechende Nachjustierungen erforderlich werden lassen. Kennzeichnend für diese genormten Lösungen ist, daß eine Verschraubung der gefügten Bauteile Stand der Technik ist.

Zur Vermeidung der Nachteile die sich unter Fertigungsbedingungen im Maschinenbau oder in der sonstigen Industriegüterfertigung ergebenden Abstandmaßunterschiede zwischen Paßbolzen und entsprechenden Bohrungsaufnahmen und zur Optimierung der Fügeprozesse durch Realisierung paßgenauer Verbindungen sind unter anderem aus den Patenten DE 4135 418 A1, DE 3919 077 C1 und DE 4307 342 A1 Prinzipien bekannt, wobei runde Paßbolzen über ihre Einführungsfasen und über Einführungsrillen in backenartige Klemm- und Spannwerkzeuge eingeführt, umfaßt und in diesen gespannt, oder verriegelt werden. Durch mechanische und hydraulische Antriebsprinzipien erfolgt die Betätigung der Verriegelungselemente und damit die Spannung oder Verriegelung. Gleichartig erfolgt die Entspannung durch die Freigabe der Paßbolzen. Die Klemm- und Spannwerkzeuge sind zu Spannrahmen zusammenstellbar, mit denen abstandsgenau drei oder vier Paßbolzen gleichzeitig mitten und paßgenau verriegelt sind. Diese Spannrahmen sind eine zusätzliche Baugruppe, die zwischen den oberen oder vorderen Maschinenbauteilen und dem unteren oder hinteren Maschinenbauteil anzuordnen ist, um beide Maschinenbauteile paßgenau wiederholbar fügen zu können.

Der im Patentanspruch 1 angegeben Erfindung liegt deshalb das Problem zugrunde, ein paßgenaues und wiederholbares Fügen durchzuführen wobei bestimmte geringe Abstandsmaßunterschiede zwischen den Paßbolzen des jeweiligen zu fügenden oberen und vorderen Maschinenbauteiles und den Aufnahmebohrungen im unteren und hinteren Maschinenbauteil ausgleichbar sind, ohne daß zusätzlich Spannrahmen oder Halterungen mit gesonderten Klemm- und Spannwerkzeugen für Paßbolzen erforderlich sind.

Dieses Problem wird durch die im Patentanspruch 1 aufgeführten Merkmale gelöst.
Die mit der Erfindung erzielten Vorteile bestehen insbesondere darin, daß nach einer paßgenauen Fügung einerseits dem Paßsystembolzen A eine genaue Mittenjustierung und dem Paßsystembolzen B eine genaue Umfangsjustierung und anderseits durch an beiden an deren Umfang angeordneten radialgerichteten expandierenden Justierelemente Abstandsmaßunterschiede der Paßsystembolzen gegenüber Paßbohrungen und Paßbuchsen in den zu fügenden Maschinenteilen ausgleichbar sind.
Das Justierprinzip ist körperlich in die Paßsystembolzen A und B integriert. Die Spannung der gefügten miteinander verbundenen Maschinenbauteile erfolgt durch mindestens einen Systembolzen C.

Eine weitergehende Ausgestaltung der Erfindung ist im Patentanspruch 2 angegeben.
Diese weitergehende Ausgestaltung ergänzt die dargestellten Vorteile der erfinderischen Lösung bezüglich einer Optimierung der Positionierung der Paßsystembolzen in dem einer Flächen- oder Linienanlage der Paßführungsstege durch eine Punktanlage in den Aufnahme Bohrungen der zu fügenden Maschinenbauteile ersetzbar ist.

Ausführungsbeispiele der Erfindung und deren weitere Ausgestaltung sind in beispielhaften Anwendungen in den Figuren dargestellt und werden im folgenden näher beschrieben.

Es zeigen
- Fig. 1: einen gefügten Paßsystembolzen A oder B mit Paßbuchsen, im Mittenschnitt
- Fig. 2: einen gefügten Paßsystembolzen A oder B
- Fig. 3: eine Seitenansicht in Richtung A des Paßsystembolzens A
- Fig. 4: eine Seitenansicht in Richtung A des Paßsystembolzen B
- Fig. 5: eine paßgenaue Fügung mittels Schnell-Pass-System, in der Draufsicht
- Fig. 6: eine paßgenaue Fügung einer Grundplatte, einer Werkstückeinspannvorrichtung auf einer Palette, im Teilschnitt
- Fig. 7: eine paßgenaue Fügung von Spannplatten beidseitig an der Mittenwand eines Aufspannkörpers, in vereinfachter Darstellung

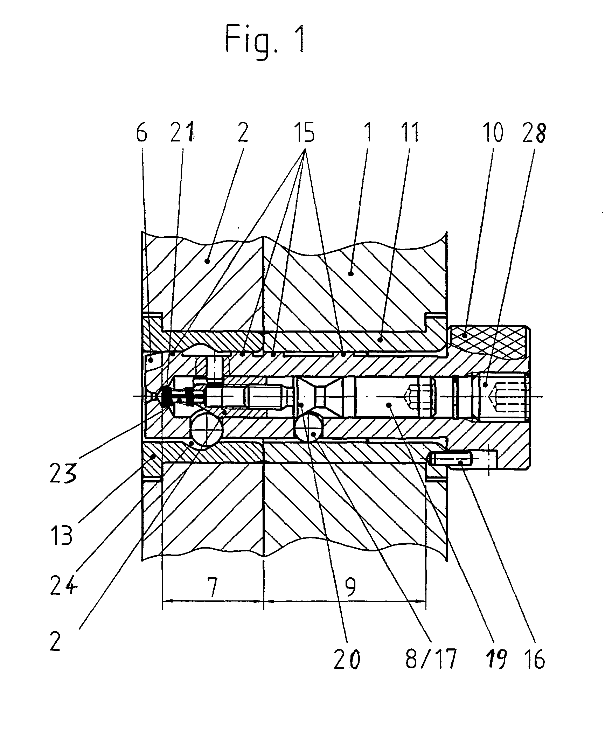

Der in Fig. 1 in eingepaßter und gefügter Stellung dargestellte Paßsystembolzen A oder B, 3 oder 4, besteht im wesentlichen aus dem Vorpositionierdorn 6, mit einer kegelstumpfartigen Anfasung ausgestattet, aus dem halsartigen ersten Positionierschaft 7, aus einem zweiten Positionierschaft 9, sowie aus einem Kopfteil 10 und ist in den Paßbuchsen 11 und 13 aufgenommen. Am Umfang des Positionierschaftes 9 ist mindestens ein expandierendes Justierelement 8, als radialbewegliche Kugel 17 ausgebildet, angeordnet. Am Umfang der Positionierschäfte 7 und 9 sind zwei oder ein axialgerichtet verlaufende Paßführungsstege 15, der radialbeweglichen Kugel 17 symmetrisch gegenüberliegend, angeordnet. Der erste Positionierschaft 7 der Paßsystembolzen A oder B 3 oder 4 ist als Klemmschaft ausgebildet. Die radialbeweglichen Druckkugeln 17 liegen in axialversetzten Spannschrägen 25 der Paßbuchse 13 an, wobei durch den geringen Anlagewinkel eine Niederzugspannung erzeugt ist. Axialgerichte ist in den Paßsystzembolzen A und B, 3 und 4, eine Linear- Weg- Druckeinstellung aufgenommen. Sie besteht aus den stirnseitig aneinanderliegenden Einzelelementen, einen schraubbetätigten Linearantrieb 18, einem Koppelglied 19, kegelförmigen Ablenkgliedem 20, entgegengerichtet beweglich, und aus einer Entspannung- Druckfeder 21 Durch die Linear- Weg- Druckeinstellung bedingt liegen die Druckkugeln 17 an den Innenwandungen der Paßbuchsen 13 ebenso wie die Paßführungsstege 15 in Passungsstellung an, sodaß sie durch Punkt-, Linien- und Flächenpressungen justiert sind. Dabei ist der Paßsystembolzen A oder B, 3 oder 4, über sein Kopfteil 10 mit einem stiftartigen Verdrehsicherungselement 16 in der vorgegeben Position im Schnell-Pass-System gegen Verdrehung gesichert.

Die Paßführungsstege 15 sind als je zwei erhabene Führungs- und Anlagepunkte, in jeder der Paßbuchsen 11 und 13 ragend, ausgebildet. Mittels der Paßsystembolzen A und B, 3 und 4 ist das obere und vordere Maschinenbauteil 1 mit dem unteren und hinterem Maschinenbauteil 2 paßgenau gefügt und fest verbunden.

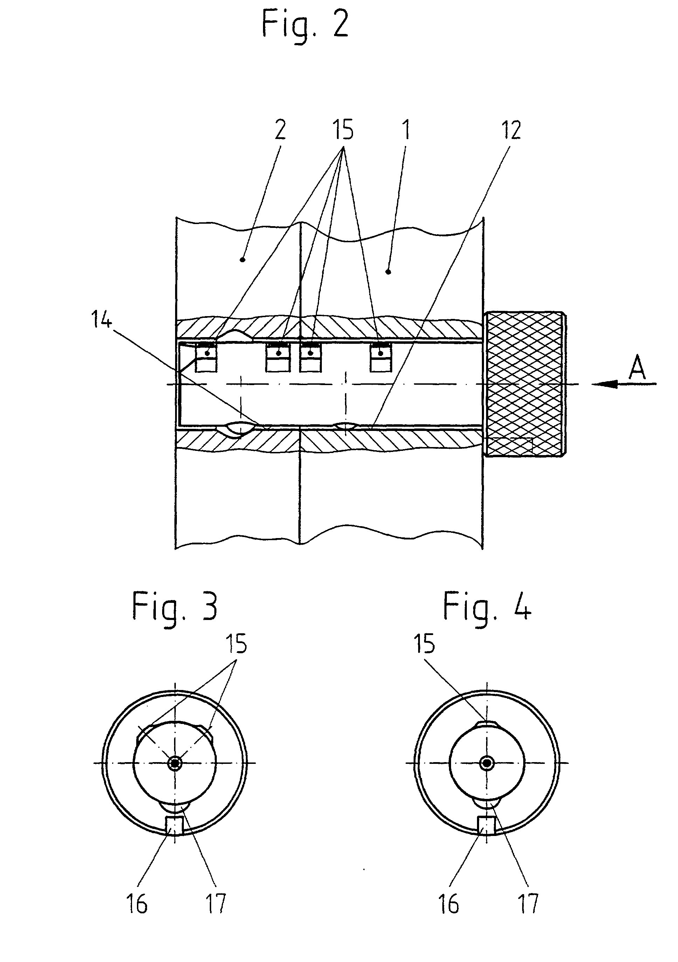

In Fig. 2 ist der in Fig. 1 dargestellte Paßsystembolzen A und B, 3 und 4 in den Paßbohrungen 12 und 14 der Maschinenbauteile 1 und 2 aufgenommen, justiert, paßgenaugefügt und fest verbunden.

Kennzeichnend für den in Fig. 3 dargestellten Paßsystembolzen A, 3 sind zwei am Umfang befindliche achsparallele Paßführungsstege 15, die, annähern einen rechten Winkel um die Mittenachse zueinander bildend, symmetrisch der Druckkugel 17 gegenüberliegend. Am Umfang des in Fig. 4 dargestellten Paßsystembolzen B, 4 ist ein Paßführungssteg 15 achsparallel angeordnet. Dieser liegt der Druckkugel 17 gegenüber.

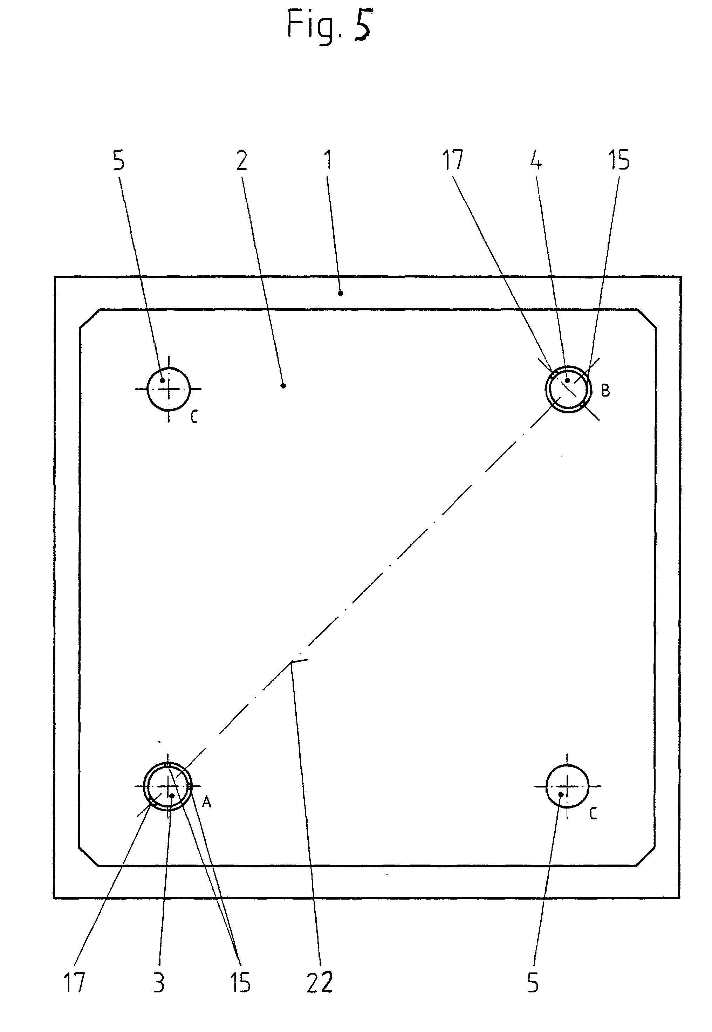

Das in Fig. 5 beispielhaft dargestellt Schnell-Pass-System besteht aus einem Paßsystembolzen A, 3 einem Paßsystembolzen B, 4 und zwei Systembolzen C, 5, zum Spannen der gefügten Maschinenbauteile 1 und 2, in Dreieckslagen einanderzugeordnet. Der Paßsystembolzen A, 3 ist zum Paßsystembolzen B, 4 so ausgerichtet, daß die zwei Paßführungsstege 15 am Paßsystembolzen A, 3 einen rechten Winkel um dessen Mittenachse bildend, symmetrisch zur Verbindungslinie 22 angeordnet sind. Der Paßführungssteg 15 am Paßsystembolzen B, 4 ist im rechten Winkel zur Verbindungslinie 22 angeordnet.

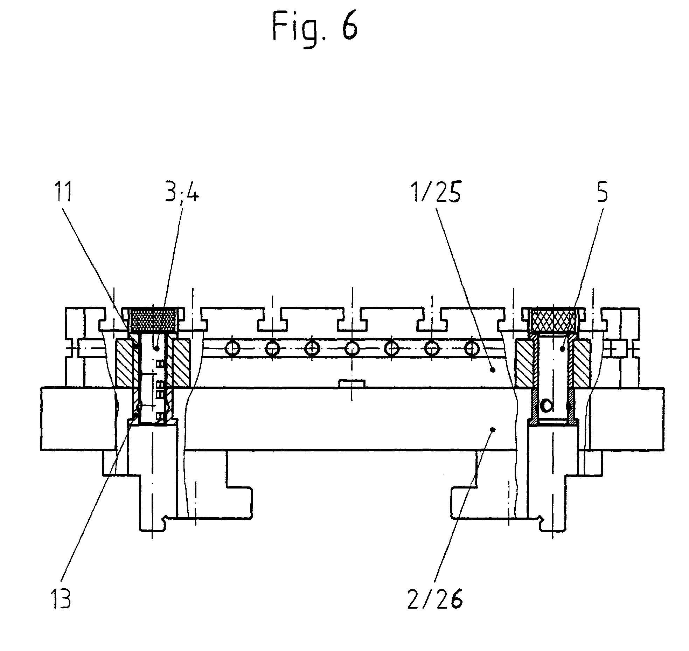

In Fig. 6 ist beispielhaft eine mittels Paßsystembolzen Aund B, 3 und 4 und Systembolzen C, 5 paßgenau gefügte und durch Spannung verbundene Kombination einer Grundplatte einer Werkstückeinspannvorrichtung 25 mit einer Palette 26 eines Bohr- Fräs- Bearbeitungszentrum dargestellt. In die Grundplatte 25 sind Paßbuchsen 11 und in die Palette 26 sind Paßbuchsen 13 dafür eingebracht.

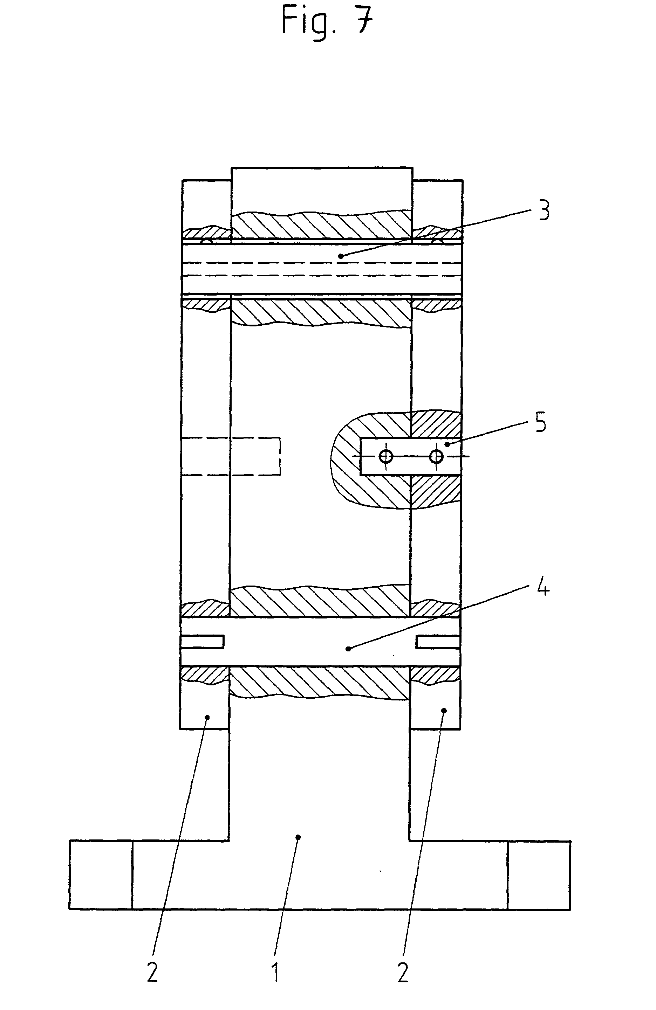

Die in Fig. 7 vereinfacht beispielhaft dargestellt Werkstückeinspannvorrichtung besteht aus einem als doppelwinkelförmigen Aufspannkörper ausgebildeten Maschinenbauteil 1, in dessen Spannwand als Spannplatten ausgebildete Maschinenbauteile 2 paßgenau gefügt und gespannt sind. Die Paßsystembolzen A und B, 3 und 4 sind länger dimensioniert als die Wandstärke der Spannwand und verfügen an beiden Enden über Vorpositionierdorne 6, Positionierschäfte 7 mit radialgerichteten Justierelementen 8. Die Spannung der zwei Spannplatten an der Spannwand erfolgt mittels Systembolzen C, 5.

### Bezugszeichenliste

### Pos.-Nr.

- 1.: oberes oder vorderes Maschinenbauteil
- 2.: unteres oder hinteres Maschinenbauteil
- 3.: Paßsystembolzen A
- 4.: Paßsystembolzen B
- 5.: Systembolzen C
- 6.: Vorpositionierdorn
- 7.: erster Positionierschaft
- 8.: expandierendes Justierelement
- 9.: zweiter Positionierschaft
- 10.: Kopfteil
- 11.: (obere oder vordere) Paßbuchse
- 12.: (obere oder vordere) Paßbohrung
- 13.: (untere oder hintere) Paßbuchse
- 14.: (untere oder hintere) Paßbohrung
- 15.: Paßführungssteg
- 16.: Verdrehsicherungselement
- 17.: Druckkugel
- 28.: Linearantrieb
- 19.: Koppelglied
- 20.: Ablenkglied
- 21.: Entspannungs-Druckfeder
- 22.: Verbindungslinie (zwischen Paßsystembolzen A und B)
- 23.: Klemmschaft (an Paßbolzen A und B)
- 24.: Spannschrägen
- 25.: Grundplatte einer Werkstückeinspannvorrichtung
- 26.: Palette

## Patentansprüche

1. Schnell-Pass-System für ein paßgenaues wiederholbares Fügen von mindestens zwei mit jeweils einer ebenen Fläche plan aneinander liegender Bauteile (1,2) von Maschinen und anderen Industriegütern oder aneinander liegender Werkstücke, in definierter Lage zueinander angeordnet, beispielsweise als eine Schnittstelle zwischen Werkstückeinspannvorrichtungen und Paletten von Bohr-, Fräs-, Bearbeitungszentren ausgebildet mit mindestens jeweils zwei in einem bestimmten Abstand zueinander angeordnete Paßsystembolzen (A-C) aus einem Vorpositionierdorn (6) mit kegelstumpfartiger Anfasung, aus einem haltsartigen ersten Positionierschaft (7) mit mindestens einem an dessen Umfang angeordneten, über einen Linearantrieb (20) Koppel- (21) und Ablenkglieder (22) bewegtes, als federnde Druckkugel (17) ausgebildetes, radialgerichtet expandierenden Justierelement (8) und aus einem zweiten Positionierschaft (9), der im zu fügenden Maschinenteil (2) aufgenommen ist, bestehend, wobei die Paßsystembolzen (A,B) in mindestens zwei adäquat parallel angeordnete und dimensionierte Paßbohrungen (12) oder Paßbuchsen (11) ragend, eingepaßt, justiert und die gefügten Bauteile von mindestens einem dritten Systembolzen (C) in der eingepaßten Fügeposition befestigt sind,
**dadurch gekennzeichnet,**
**daß** ein Paßsystembolzen A (3) an seinem Umfang mit zwei Paßführungsstegen (15) und ein Paßsystembolzen B (4) an seinem Umfang mit einem Paßführungssteg (15), jeweils einer Druckkugel (17) gegenüber liegend, ausgestattet sind und gemeinsam mit jeweils einem Systembolzen C (5) in einer Dreleckslage zueinander angeordnet sind, wobei die zwei Paßführungsstege (15) am Paßsystembolzen A (3) in einer Mittenlage der Paßbohrung (12, 14) oder der Paßbuchse (11, 13), einen rechten Winkel um die Mittenachse des Paßsystembolzen A (3) bilden und symmetrisch zur Verbindungslinie (22) beider Paßsystembolzen A und B (3 und 4) in Richtung des Paßsystembolzens B (4) in einer tolerenzausgleichenden Umfangslage der Paßbohrung (12, 14) oder der Paßbuchse (11, 13) angeordnet sind und der Paßführungssteg (15) am Paßsystembolzen B (4) im rechten Winkel zur Verbindungslinie (22) beider Paßsystembolzen A und B (3 und 4) angeordnet ist,

2. Schnell-Pass-System nach Anspruch 1,
**dadurch gekennzeichnet,**
**daß** die Paßführungsstege (15) wahlweise als erhabene Führungs- und Anlagepunkte ausgebildet sind, wobei vorzugsweise je zwei Führungs- und Anlagepunkte an den Innenwandungen jeder Paßbohrung (12, 14) oder jeder Paßbuchse (11, 13) anliegen.

## Claims

1. Quick-fitting-system for a fit-into position jointing of at least two mechanical components (1, 2) and other industrial goods evenly arranged side-by-side each with one plane surface or of components arranged side-by-side, located in defined position one to the other, for example as an interface between work holding fixtures and pallets of boring and milling machining centres, being designed with at least each two fitting system bolts (A-C) located in a determined space one to the other, one pre-locating pin (6) with frusto-conical chamfer, one collar-type first positioning shank (7) with at least one expansible, radially oriented adjusting element (8) designed as spring-operated pressure ball (17) being arranged on it's circumference and moved via a linear drive (20), couplers (21) and deflection elements (22) and a second positioning shank (9) being located in the mechanical component to be joined (2), where the fitting system bolts (A, B) are fitted-in, and adjusted in a manner to project in at least two adequately parallel arranged and dimensioned locating holes (12) or locating liners (11) and the joined components are fastened in the fitted-in joined position by at least a third system bolt C,
**characterised in that**
a fitting system bolt A (3) is equipped on it's circumference with two fitting guide lands (15) and a fitting system bolt B (4) is equipped on it's circumference with one fitting guide land (15) being both opposite a pressure ball (17) and are arranged in a triangular position together with one system bolt C (5) each, where the two fitting guide lands (15) on fitting system bolt A (3) are located in a centre position of locating hole (12, 14) or of locating liner (11, 13) forming a right angle through the centre axis of the fitting system bolt A(3) and being symmetrical to the connecting line (22) of both fitting system bolts A and B (3 and 4) in the direction towards the fitting system bolt B (4) in a tolerance correcting, circumferential position of locating hole (12, 14) or of locating liner (11, 13) and that the fitting guide land (15) on fitting system bolt B (4) is arranged in right angle to the connecting line (22) of both fitting system bolts A and B (3 and 4),

2. Quick-fitting system as per claim 1,
**characterised in that**
the fitting guide lands (15) optionally are designed as embossed guiding and contact points, where two guiding and contact points each preferably apply on the internal wall of any locating hole (12, 14) or any locating liner (11, 13).

## Revendications

1. Système de raccord rapide pour un assemblage répétable et précisément ajusté d'au moins deux pièces de construction mécanique et d'autres biens industriels (1, 2), mises au même niveau et se touchant avec une de leurs surfaces planes ou de pièces à usiner étant mises l'une au bout de l'autre et arrangées en position définie l'une par rapport à l'autre, étant conçu, par exemple, en tant qu'une interface entre les dispositifs prise de pièce et les palettes de centres d'usinage de perçage et de fraisage, étant configuré d'au moins toujours deux boulons du système de raccord (A - C) arrangés à un écart déterminé l'un par rapport à l'autre, composés d'un mandrin de pré-positionnement (6) avec un chanfrein tronconique, d'une première queue de positionnement en forme de col (7) dotée au moins d'un élément d'ajustage (8) expansible orienté en sens radial et arrangé à sa circonférence, configuré en tant que bille de pression à action de ressort (17) déplacé par l'intermédiaire d'un entraînement linéaire (20), d'éléments de couplage (21) et d'éléments déflecteurs (22), et d'une deuxième queue de positionnement (9) étant reçue dans la pièce de construction mécanique à assembler (2), où les boulons du système de raccord (A, B) entrant au moins dans deux trous d'ajustage (12) ou douilles d'ajustage (11) adéquatement dimensionnés et arrangés de façon parallèle sont adaptés et ajustés et où les composants assemblés sont fixés dans la position ajustée d'assemblage par au moins un troisième boulon de système (C),
**caractérisé par le fait**
**qu'**un boulon du système de raccord A (3) est doté sur sa circonférence de deux arêtes du guidage d'ajustement (15) et un boulon du système de raccord B (4) est doté sur sa circonférence d'une arête du guidage d'ajustement (15) étant toujours arrangées en face d'une bille de pression (17) et que les deux boulons sont arrangés en position de triangle ensemble avec un boulon de système C (5), dans laquelle les deux arêtes du guidage d'ajustement (15) au boulon du système de raccord A (3) forment un angle droit autour de l'axe du milieu du boulon du système de raccord A (3) dans une position du milieu du trou d'ajustage (12, 14) ou de la douille d'ajustage (11, 13) et sont arrangées de façon symétrique à la ligne de jonction (22) des deux boulons du système de raccord A et B (3 et 4) vers le sens du boulon du système de raccord B (4) dans une position circonférentielle égalisant la tolérance du trou d'ajustage (12, 14) ou de la douille d'ajustage (11, 13) et que l'arête du guidage d'ajustement (15) au boulon du système de raccord B (4) est arrangée en angle droit par rapport à la ligne de jonction (22) des deux boulons du système de raccord A et B (3 et 4),

2. Système de raccord rapide suivant revendication 1,
**caractérisé par le fait**
**que** les arêtes du guidage d'ajustement (15) sont configurées à option en tant que points saillants de guidage et de contact, où toujours deux points de guidage et de contact s'appliquent de préférence aux parois intérieures de chaque trou d'ajustage (12, 14) ou de chaque douille d'ajustage (11, 13).
